# EUROPÄISCHE PATENTSCHRIFT

(11) **EP 3 381 185 B1**
(45) Veröffentlichungstag und Bekanntmachung des Hinweises auf die Patenterteilung: **10.09.2025**
(21) Anmeldenummer: 16797729.7
(22) Anmeldetag: 24.10.2016
(51) Int. Cl.: H04N 7/18, B60R 1/00

(54) **VERFAHREN UND VORRICHTUNG ZUR ERMITTLUNG VON VERDECKUNGSBEREICHEN IN DER FAHRZEUGUMGEBUNG EINES FAHRZEUGES**
METHOD AND DEVICE FOR DETERMINING CONCEALED REGIONS IN THE VEHICLE ENVIRONMENT OF A VEHICLE
PROCÉDÉ ET DISPOSITIF DE DÉTERMINATION DE ZONES D'OCCULTATION DANS L'ENVIRONNEMENT D'UN VÉHICULE

(30) Priorität: 24.11.2015 DE 102015223176
(43) Veröffentlichungstag der Anmeldung: 03.10.2018
(73) Patentinhaber: AUMOVIO Autonomous Mobility Germany GmbH, 85057 Ingolstadt (DE)
(72) Erfinder: FRIEBE, Markus, 95482 Gefrees (DE); LÖHR, Felix, 56068 Koblenz (DE)
(74) Vertreter: Aumovio Corporation
(86) Internationale Anmeldenummer: PCT/DE2016/200489
(87) Internationale Veröffentlichungsnummer: WO 2017/088863

(56) Entgegenhaltungen:
- WO-A2-2015/169316
- DE-A1- 102013 019 145
- DE-A1- 102014 107 156
- US-A1- 2013 245 877

## Beschreibung

Die Erfindung betrifft ein Verfahren und eine Vorrichtung zur Ermittlung von Verdeckungsbereichen in der Fahrzeugumgebung eines Fahrzeuges, und insbesondere ein Fahrerassistenzsystem, bei dem Verdeckungsbereiche, welche den Sichtbereich von optischen Umgebungssensoren des Fahrerassistenzsystems einschränken, ermittelt werden.

Fahrzeuge weisen zunehmend Fahrerassistenzsysteme auf, welche den Fahrer des Fahrzeuges bei der Durchführung von Fahrmanövern unterstützen. Derartige Fahrerassistenzsysteme verfügen über Anzeigeeinheiten, welche dem Fahrer die Fahrzeugumgebung eines Fahrzeuges optisch anzeigen. Die Fahrzeugkameras, welche Kamerabilder der Fahrzeugumgebung erzeugen, übertragen diese Bilder bzw. Bilddaten an eine Datenverarbeitungseinheit, welche die Bilddaten auf eine vorgegebene Projektionsfläche projiziert, um sie dem Fahrer auf einer Anzeige anzuzeigen. Neben Fahrzeugkameras bzw. optischen Sensoreinheiten verfügen Fahrerassistenzsysteme auch über weitere Umgebungssensoren, beispielsweise Ultraschallsensoren.

Bei herkömmlichen Fahrerassistenzsystemen kann es bei Auftreten von Hindernissen in der Fahrzeugumgebung, beispielsweise bei Vorhandensein von in der Nähe des Fahrzeugs parkender anderer Fahrzeuge, zu störenden Bildverzerrungen des angezeigten Bildes der Fahrzeugumgebung kommen. Diese Bildverzerrungen werden durch Verdeckungsbereiche hervorgerufen, die einen Sichtbereich von optischen Umgebungssensoren des Fahrerassistenzsystems einschränken.

Aus der DE 10 2014 107 156 A1 ist ein System zum Bereitstellen einer verbesserten perspektivischen Ansicht eines Bereichs in der Front eines Fahrzeugs bekannt, wobei das System als Umgebungssensoren eine erste Kamera auf der linken Frontseite des Fahrzeugs und eine zweite Kamera auf der rechten Frontseite des Fahrzeugs umfasst. Ferner werden die empfangenen Bilder zur Erkennung von Hindernissen in der Fahrzeugumgebung des Fahrzeuges ausgewertet. Ferner werden Bereiche, die sich hinter Vorsprüngen des Fahrzeuges verbergen und sich vor den Linsen der Kameras erstrecken berechnet und zur Bilderstellung herangezogen.

Die DE 10 2013 019 145 A1 offenbart ein Fahrerassistenzsystem für ein Kraftfahrzeug, dass die Umgebung des Kraftfahrzeugs mit optischen Umfeldsensoren erfasst. Ferner wird das Umfeld in Unterbereiche unterteilt, wobei es relevante Unterbereiche gibt, die von einer Abschattung betroffen sein können, wobei Maßnahmen ergriffen werden, z. B. Fahreingriffe oder Fahrwerkseinstellungen, um nicht erfasste Unterbereiche zu erfassen.

Die US 2013/245877 A1 beschreibt ein Fahrerassistenzsystem mit Umgebungssensoren, die zur Erkennung von Hindernissen in der Fahrzeugumgebung des Fahrzeuges ausgewertet werden. Darüber hinaus werden auch in Abhängigkeit von erkannten Hindernissen Verdeckungsbereiche in der Fahrzeugumgebung des Fahrzeuges ermittelt, die von Hindernissen verdeckt werden und den Sichtbereich einschränken, wobei ebenfalls diverse Maßnahmen ergriffen werden, wie z. B. geeignete Fahrmanöver, Sensorfusion oder das Vorsehen beweglicher Halterungen für die Sensoren, um derartige Verdeckungsbereiche sichtbar zu machen.

Es ist daher eine Aufgabe der vorliegenden Erfindung, ein Verfahren und eine Vorrichtung zur Ermittlung derartiger Verdeckungsbereiche in der Fahrzeugumgebung eines Fahrzeuges zu schaffen.

Diese Aufgabe wird erfindungsgemäß durch eine Vorrichtung mit den in Patentanspruch 1 angegebenen Merkmalen gelöst.

Die Erfindung schafft demnach ein Fahrerassistenzsystem für ein Fahrzeug mit
Umgebungssensoren, die eine Fahrzeugumgebung des Fahrzeuges sensorisch erfassen und mit
einer Datenverarbeitungseinheit, die Sensordaten der Umgebungssensoren zur Erkennung von Hindernissen in der Fahrzeugumgebung des Fahrzeuges auswertet,
wobei in Abhängigkeit von erkannten Hindernissen Verdeckungsbereiche in der Fahrzeugumgebung des Fahrzeuges ermittelt werden, die von den Hindernissen verdeckt werden und einen Sichtbereich von optischen Umgebungssensoren des Fahrerassistenzsystems einschränken,
und wobei die Datenverarbeitungseinheit die durch die erkannten Hindernisse hervorgerufenen Verdeckungsbereiche in Abhängigkeit von einer Relativgeschwindigkeit zwischen den erkannten Hindernissen und dem Fahrzeug berechnet.

Dabei erfolgt die Ermittlung der von den erkannten Hindernissen hervorgerufenen Verdeckungsbereiche vorzugsweise in Abhängigkeit von einer Relativlage des betreffenden Hindernisses zu einem optischen Umgebungssensor des Fahrerassistenzsystems und/oder in Abhängigkeit von der Ausdehnung bzw. Größe des betreffenden Hindernisses.

Bei einer möglichen Ausführungsform des erfindungsgemäßen Fahrerassistenzsystems bereitet die Datenverarbeitungseinheit Bildsensordaten, die von optischen Umgebungssensoren, insbesondere Fahrzeugkameras, stammen, in den ermittelten Verdeckungsbereichen auf.

Bei einer möglichen Ausführungsform des erfindungsgemäßen Fahrerassistenzsystems werden die ermittelten Verdeckungsbereiche durch die Datenverarbeitungseinheit aufbereitet, indem die Bildsensordaten durch ein Filter gefiltert werden.

Bei einer weiteren möglichen Ausführungsform des erfindungsgemäßen Fahrerassistenzsystems überdeckt die Datenverarbeitungseinheit die von den erkannten Hindernissen hervorgerufenen Verdeckungsbereiche mit Texturflächen.

Bei einer weiteren möglichen Ausführungsform des erfindungsgemäßen Fahrerassistenzsystems berechnet die Datenverarbeitungseinheit die durch die erkannten Hindernisse hervorgerufenen Verdeckungsbereiche zusätzlich in Abhängigkeit von einer zur Bilddarstellung verwendeten Projektionsfläche, insbesondere in Abhängigkeit von einer statischen zweidimensionalen Bodenfläche oder in Abhängigkeit von einer dreidimensionalen schüsselförmigen Projektionsfläche.

Ferner ist eine Steuerschaltung vorgesehen, die in Abhängigkeit der von den erkannten Hindernissen hervorgerufenen Verdeckungsbereiche optische Umgebungssensoren, insbesondere Fahrzeugkameras des Fahrerassistenzsystems, ansteuert.

Dabei schaltet die Steuerschaltung in Abhängigkeit von den ermittelten Verdeckungsbereichen zwischen verschiedenen optischen Umgebungssensoren des Fahrerassistenzsystems um.

Bei einer weiteren möglichen Ausführungsform des erfindungsgemäßen Fahrerassistenzsystems weisen die optischen Umgebungssensoren Fahrzeugkameras, insbesondere Fischaugenkameras, auf, die jeweils ein vorgegebenes Sichtfeld besitzen.

Bei einer weiteren möglichen Ausführungsform des erfindungsgemäßen Fahrerassistenzsystems berechnet die Datenverarbeitungseinheit die durch die erkannten Hindernisse hervorgerufenen Verdeckungsbereiche in Abhängigkeit von den Sichtfeldern der betroffenen optischen Umgebungssensoren.

Die Erfindung schafft ferner ein Verfahren zum Ermitteln von Verdeckungsbereichen mit den in Patentanspruch 7 angegebenen Merkmalen.

Die Erfindung schafft demnach ein Verfahren zum Ermitteln von Verdeckungsbereichen in der Fahrzeugumgebung eines Fahrzeuges mit den Schritten:
Auswerten von Sensordaten, die von Umgebungssensoren des Fahrzeuges erzeugt werden, zur Erkennung von Hindernissen in der Fahrzeugumgebung des Fahrzeuges und
Berechnen in Abhängigkeit der erkannten Hindernisse von Verdeckungsbereichen, die von den Hindernissen verdeckt werden und einen Sichtbereich der optischen Umgebungssensoren des Fahrzeuges einschränken, wobei die von den erkannten Hindernissen hervorgerufenen Verdeckungsbereiche in Abhängigkeit von einer Relativgeschwindigkeit zwischen den erkannten Hindernissen und dem Fahrzeug berechnet werden.

Bei einer möglichen Ausführungsform des erfindungsgemäßen Verfahrens werden die von optischen Umgebungssensoren stammenden Bildsensordaten aufbereitet, insbesondere gefiltert.

Bei einer weiteren möglichen Ausführungsform des erfindungsgemäßen Verfahrens werden die von den erkannten Hindernissen hervorgerufenen Verdeckungsbereiche mit Texturflächen überdeckt.

Bei einer weiteren möglichen Ausführungsform des erfindungsgemäßen Verfahrens werden die von den erkannten Hindernissen hervorgerufenen Verdeckungsbereiche in Abhängigkeit von einer zur Bilddarstellung verwendeten zwei- oder dreidimensionalen Projektionsfläche berechnet.

Bei einer weiteren möglichen Ausführungsform des erfindungsgemäßen Verfahrens werden in Abhängigkeit der ermittelten Verdeckungsbereiche optische Umgebungssensoren, insbesondere Fahrzeugkameras, angesteuert.

Ferner wird bei dem erfindungsgemäßen Verfahren in Abhängigkeit von den ermittelten Verdeckungsbereichen zwischen verschiedenen optischen Umgebungssensoren, insbesondere Fahrzeugkameras, umgeschaltet.

Bei einer weiteren möglichen Ausführungsform des erfindungsgemäßen Verfahrens werden die von den erkannten Hindernissen hervorgerufenen Verdeckungsbereiche in Abhängigkeit von den vorgegebenen Sichtfeldern der betreffenden optischen Umgebungssensoren berechnet.

Im Weiteren werden mögliche Ausführungsformen des erfindungsgemäßen Fahrerassistenzsystems und des erfindungsgemäßen Verfahrens zum Ermitteln von Verdeckungsbereichen unter Bezugnahme auf die beigefügten Figuren näher erläutert.

Es zeigen:
- Figur 1: eine schematische Darstellung eines Ausführungsbeispiels des erfindungsgemäßen Fahrerassistenzsystems;
- Figur 2: ein Blockschaltbild zur Darstellung einer Ausführungsform des erfindungsgemäßen Fahrerassistenzsystems;
- Figur 3: eine schematische Darstellung zur Erläuterung der Funktionsweise des erfindungsgemäßen Fahrerassistenzsystems;
- Figur 4: ein Ablaufdiagramm zur Darstellung eines Ausführungsbeispiels eines erfindungsgemäßen Verfahrens zur Ermittlung von Verdeckungsbereichen in der Fahrzeugumgebung eines Fahrzeuges;
- Figur 5: ein weiteres Ablaufdiagramm zur Darstellung eines weiteren Ausführungsbeispiels des erfindungsgemäßen Verfahrens.

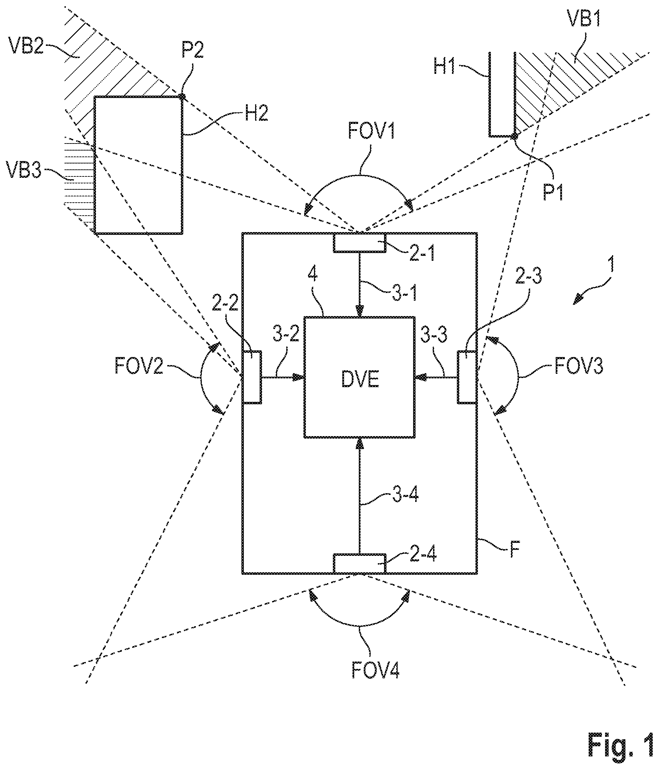

Figur 1 zeigt schematisch ein Fahrzeug F, welches über ein Fahrerassistenzsystem gemäß der Erfindung verfügt. In dem dargestellten Ausführungsbeispiel sind an der Karosserie des Fahrzeuges F an verschiedenen Seiten optische Umgebungssensoren angebracht, welche die Fahrzeugumgebung FU des Fahrzeuges F sensorisch erfassen. Bei den optischen Umgebungssensoren kann es sich beispielsweise um Fahrzeugkameras handeln, welche Fahrzeugbilder der Fahrzeugumgebung liefern. Bei dem in Figur 1 dargestellten Ausführungsbeispiel verfügt das Fahrerassistenzsystem 1 des Fahrzeuges F über vier Fahrzeugkameras 2-1, 2-2, 2-3, 2-4. Dabei ist die erste Fahrzeugkamera 2-1 an der Vorderseite der Karosserie des Fahrzeuges F angebracht und besitzt ein Sichtfeld bzw. einen Sichtbereich FOV1, wie in Figur 1 dargestellt. Weiterhin befinden sich an der Fahrzeugkarosserie des Fahrzeuges F auf der linken und rechten Seite jeweils eine Fahrzeugkamera, die die seitliche Fahrzeugumgebung des Fahrzeuges F optisch erfassen. Die auf der linken Seite des Fahrzeuges F angebrachte Fahrzeugkamera 2-2 besitzt ein Sichtfeld bzw. einen Sichtbereich FOV2. Die rechte Fahrzeugkamera 2-3 erfasst den rechts von dem Fahrzeug F gelegenen Teil der Fahrzeugumgebung FU und besitzt einen Sichtbereich FOV3, wie in Figur 1 dargestellt. Weiterhin ist an der Rück- bzw. Hinterseite des Fahrzeuges F eine Fahrzeugkamera 2-4 mit einem Sichtbereich FOV4 vorgesehen. Die vier optischen Umgebungssensoren 2-1 bis 2-4 können bei einer möglichen Ausführungsform Fischaugenkameras sein mit einem relativ breiten Sichtbereich FOV von mehr als 170°. Wie man in Figur 1 erkennen kann, können sich die Sichtbereiche bzw. Sichtfelder FOV (Field of View) der verschiedenen Fahrzeugkameras 2-i des Fahrerassistenzsystems 1 überlappen. Die verschiedenen Fahrzeugkameras 2-i sind über Signalleitungen 3-1, 3-2, 3-3, 3-4, beispielsweise über einen Signalleitungsbus oder Fahrzeugbus, mit einer Datenverarbeitungseinheit 4 des Fahrerassistenzsystems 1 verbunden. Über die Signalleitungen 3-i werden Sensordaten, insbesondere Kamerabilder, an die Datenverarbeitungseinheit 4 übermittelt. Die Datenverarbeitungseinheit 4 wertet die Sensordaten der Umgebungssensoren, insbesondere der in Figur 1 dargestellten optischen Umgebungssensoren bzw. Fahrzeugkameras 2-i, zur Erkennung von Hindernissen H in der Fahrzeugumgebung des Fahrzeuges F aus. Hierzu verfügt die Datenverarbeitungseinheit 4 über einen Prozessor, welcher die Datenauswertung der Sensordaten vornimmt. Die Sensordaten werden vorzugsweise in Echtzeit verarbeitet. Neben den optischen Umgebungssensoren 2-i kann das Fahrerassistenzsystem 1 auch über weitere Umgebungssensoren verfügen, beispielsweise Ultraschallsensoren. Diese weiteren Umgebungssensoren liefern ebenfalls Sensordaten, die von der Datenverarbeitungseinheit 4 zur Erkennung von Hindernissen H in der Fahrzeugumgebung des Fahrzeuges F ausgewertet werden können. Bei dem in Figur 1 dargestellten Beispiel befinden sich in der Fahrzeugumgebung des Fahrzeuges F zwei Hindernisse H1, H2, beispielsweise eine Mauer oder Gebäude. Bei dem in Figur 1 dargestellten Beispiel befindet sich das Hindernis H1 im Sichtbereich FOV1 der vorderen Fahrzeugkamera 2-1. Das zweite Hindernis H2 befindet sich teilweise im Sichtbereich der vorderen Fahrzeugkamera 2-1 und teilweise im Sichtbereich der linken Fahrzeugkamera 2-2. Auf Basis der erhaltenen Sensordaten werden die Hindernisse H1, H2 in der Fahrzeugumgebung erkannt. Diese Sensordaten können einerseits von den in Figur 1 dargestellten Fahrzeugkameras 2-i stammen und/oder von weiteren Umgebungssensoren des Fahrerassistenzsystems 1. Dabei wird die Größe bzw. Ausdehnung des jeweiligen Hindernisses H-i ermittelt. In Abhängigkeit von der Größe bzw. Kontur werden durch die Datenverarbeitungseinheit 4 Verdeckungsbereiche VB berechnet, welche durch die Hindernisse H jeweils verdeckt werden und den Sichtbereich eines optischen Umgebungssensors, beispielsweise einer Fahrzeugkamera 2-i des Fahrerassistenzsystems 1, einschränken. Bei dem in Figur 1 dargestellten Beispiel definiert der Lichtstrahl, der an dem extremen Konturpunkt P1 des Hindernisses H1 anliegt, den Verdeckungsbereich VB1, welcher den Sichtbereich FOV1 der vorderen Fahrzeugkamera 2-1 einschränkt. In gleicher Weise definiert der Lichtstrahl, welcher den extremen Konturpunkt P2 des Hindernisses H2 passiert, den Verdeckungsbereich VB2. Dieser zweite Verdeckungsbereich VB2 ist einerseits durch den Strahl durch den Punkt P2 begrenzt und andererseits durch die äußere Linie des Sichtfeldes FOV1 der vorderen Fahrzeugkamera 2-1. Weiterhin wird durch das Hindernis H2 ein weiterer Verdeckungsbereich VB3 hervorgerufen, welcher den Sichtbereich FOV2 der linken Fahrzeugkamera 2-2 einschränkt.

Die Datenverarbeitungseinheit 4 des Fahrerassistenzsystems 1 bereitet in einer möglichen Ausführungsform Bildsensordaten bzw. Kamerabilder, die von optischen Umgebungssensoren 2-i stammen, in den ermittelten Verdeckungsbereichen VB auf. Bei einer möglichen Ausführungsform werden die Bildsensordaten bzw. Kamerabilder in den ermittelten Verdeckungsbereichen VB gefiltert. Bei einer weiteren möglichen Ausführungsform werden die von den erkannten Hindernissen H hervorgerufenen Verdeckungsbereiche VB mit Texturflächen bzw. Texturen überdeckt.

Das Fahrerassistenzsystem 1 verfügt über eine Anzeige bzw. ein Display, auf dem die Fahrzeugumgebung des Fahrzeuges F dem Fahrer des Fahrzeuges F angezeigt werden kann. Hierzu werden Kamerabilder auf eine zweidimensionale Grundfläche oder auf eine schüsselförmige dreidimensionale Projektionsfläche projiziert. Bei einer möglichen Ausführungsform berechnet die Datenverarbeitungseinheit 4 die durch die erkannten Hindernisse H hervorgerufenen Verdeckungsbereiche VB in Abhängigkeit dieser zur Bilddarstellung verwendeten Projektionsfläche.

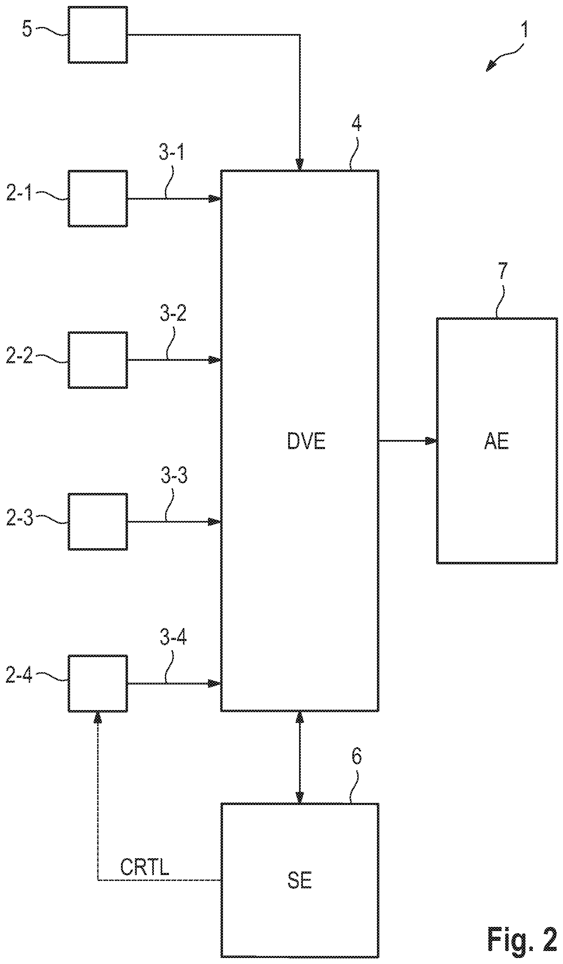

Figur 2 zeigt ein Blockschaltbild zur Darstellung einer Ausführungsform des erfindungsgemäßen Fahrerassistenzsystems 1. Die Datenverarbeitungseinheit 4 wertet die Sensordaten, die sie von Umgebungssensoren erhält, zur Erkennung von Hindernissen in der Fahrzeugumgebung des Fahrzeuges F aus. Dabei umfassen die Umgebungssensoren neben den optischen Umgebungssensoren 2-i bei einer möglichen Ausführungsform weitere Umgebungssensoren, mit denen Sensordaten zur Erkennung von Hindernissen H in der Fahrzeugumgebung FU des Fahrzeuges F durch die Datenverarbeitungseinheit 4 ausgewertet werden. Bei dem in Figur 2 dargestellten Blockschaltbild ist exemplarisch ein weiterer Umgebungssensor 5 dargestellt, welcher Sensordaten zur Erkennung von Hindernissen H in der Fahrzeugumgebung FU des Fahrzeuges F liefert. Weiterhin besitzt das Fahrerassistenzsystem 1 bei dem in Figur 2 dargestellten Ausführungsbeispiel eine Steuerschaltung 6, die in Abhängigkeit der ermittelten Verdeckungsbereiche VB optische Umgebungssensoren, insbesondere die in Figur 2 dargestellten Fahrzeugkameras 2-1 bis 2-4, ansteuert. Bei einer möglichen Ausführungsform schaltet die Steuereinheit 6 zwischen den von den Fahrzeugkameras 2-i erzeugten Bilddatenströme in Abhängigkeit der ermittelten Verdeckungsbereiche VB um. Dabei werden vorzugsweise die Bildsensordaten bzw. Kamerabilder zu der Datenverarbeitungseinheit 4 durchgeschaltet, welche möglichst wenige bzw. geringflächige Verdeckungsbereiche VB aufweisen. Bei dem in Figur 1 dargestellten Beispiel wird normalerweise der vordere rechte Bereich durch die vordere Frontkamera 2-1 sensorisch bildlich erfasst und die entsprechenden Bilddaten an die Datenverarbeitungseinheit 4 übertragen. Bei Erkennen des Hindernisses H1 und des daraus resultierenden Verdeckungsbereiches VB1 kann die Steuereinheit 6 des Fahrerassistenzsystems 1 auf die Bilddaten der rechten Fahrzeugkamera 2-3 umschalten, da das Hindernis H1 keinen Verdeckungsbereich VB innerhalb des Sichtbereichs FOV3 der rechten Fahrzeugkamera 2-3 hervorruft. Daher liefert in dem in Figur 1 dargestellten Szenario die rechte Fahrzeugkamera 2-3 qualitativ bessere Bilddaten als die vordere Fahrzeugkamera 2-1, in dessen Sichtfeld FOV1 sich das Hindernis H1 befindet und dort einen Verdeckungsbereich VB1 hervorruft. Die Datenverarbeitungseinheit 4 berücksichtigt bei der Berechnung der Verdeckungsbereiche VB bei einer möglichen Ausführungsform die vorgegebenen Sichtfelder FOV der betreffenden optischen Umgebungssensoren bzw. Fahrzeugkameras 2-i. Die Sichtfelder bzw. Sichtwinkel der Fahrzeugkameras 2-i sind bei einer möglichen Ausführungsform in einem Konfigurationsspeicher abgelegt, auf den ein Prozessor der Datenverarbeitungseinheit 4 Zugriff hat, um die Verdeckungsbereiche VB in Abhängigkeit der ausgelesenen Sichtfelder zu berechnen.

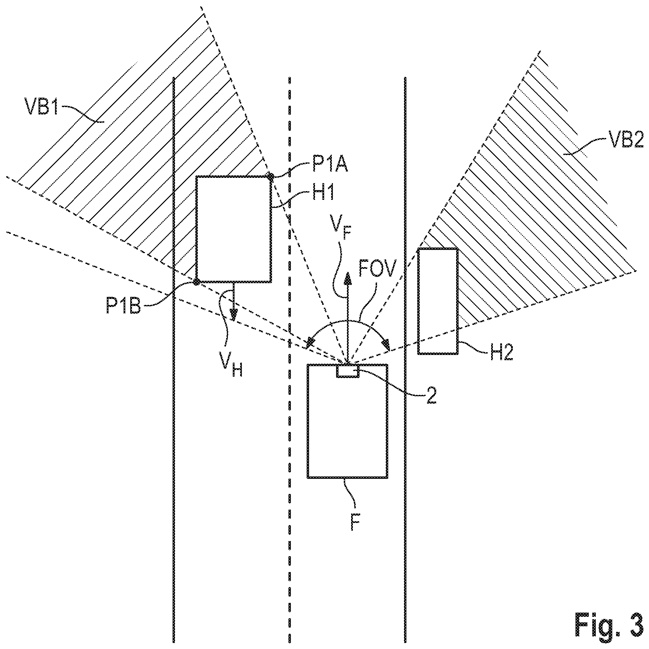

Figur 3 zeigt ein weiteres Verkehrsszenario zur Erläuterung der Funktionsweise des erfindungsgemäßen Fahrerassistenzsystems 1. In der in Figur 3 dargestellten Verkehrssituation bewegt sich ein Fahrzeug F mit einer Geschwindigkeit V_{F} auf einer Straße, wobei dem Fahrzeug F auf der Straße ein anderes Fahrzeug, welches ein Hindernis H1 darstellt, entgegenkommt. Neben der Straße befindet sich rechts ein Hindernis H2, beispielsweise innerhalb des Sichtfeldes FOV der vorderen Fahrzeugkamera 2 des Fahrzeuges F. Durch das Hindernis H2 wird innerhalb des Sichtfeldes FOV der Fahrzeugkamera 2 ein Verdeckungsbereich VB2 hervorgerufen, wobei sich der Verdeckungsbereich VB2 in Abhängigkeit der Fahrgeschwindigkeit V_{F} des Fahrzeuges F ändert. Im Gegensatz zu dem festen Hindernis H2, beispielsweise einem Gebäude, bewegt sich das andere Hindernis H1, nämlich das entgegenkommende Fahrzeug, selbst relativ zu dem Fahrzeug F. Das Fahrzeug H1 verbirgt einen Verdeckungsbereich VB1 innerhalb des Sichtfeldes FOV der vorderen Fahrzeugkamera 2, wobei der Verdeckungsbereich VB1 von der Relativgeschwindigkeit zwischen dem Fahrzeug F und dem Fahrzeug H1 abhängt. Dabei berechnet die Datenverarbeitungseinheit 4 des Fahrerassistenzsystems 1 die durch die erkannten Hindernisse H1, H2 hervorgerufenen Verdeckungsbereiche VB1, VB2 in Abhängigkeit von der Relativgeschwindigkeit zwischen den erkannten Hindernissen und dem Fahrzeug F. Bei einem festen Hindernis, wie beispielsweise dem Hindernis H2, ist die dabei zugrunde gelegte Relativgeschwindigkeit die Eigengeschwindigkeit V_{F} des Fahrzeuges F. Bei einem mobilen Hindernis H1, beispielsweise einem entgegenkommenden Fahrzeug, wird die Relativgeschwindigkeit zwischen den beiden Fahrzeugen zunächst auf Basis der Sensordaten ermittelt und anschließend der Verdeckungsbereich VB in Abhängigkeit der ermittelten Relativgeschwindigkeit durch die Datenverarbeitungseinheit 4 berechnet. Bei einer möglichen Ausführungsform berechnet die Datenverarbeitungseinheit 4 die Fläche des jeweiligen Verdeckungsbereiches VB2 näherungsweise. Liegen beispielsweise die beiden Flächenkonturpunkte P1A, P1B des entgegenkommenden Hindernisses H1 weit auseinander, ist die Fläche des dadurch verdeckten Bereiches VB1 deutlich größer als bei einem geringen Abstand zwischen den beiden Konturpunkten P1A, P1B. Ist das entgegenkommende Fahrzeug H1 beispielsweise ein Lkw, ist somit der dadurch verdeckte Bereich VB1 wesentlich größer als bei einem entgegenkommenden Pkw. Je größer die Fläche des Verdeckungsbereiches VB innerhalb des Sichtfeldes FOV der betreffenden Kamera 2 ist, desto stärker ist die Beeinträchtigung der Bildqualität der von der entsprechenden Fahrzeugkamera gelieferten Fahrzeugbilder. Bei einer möglichen Ausführungsform berücksichtigt die Steuereinheit 6 des Fahrerassistenzsystems 1 durch ein Umschalten bzw. Gewichten der verschiedenen Kamerabildströme, welche von verschiedenen Kameras geliefert werden, auch die Größe bzw. den Anteil der im Sichtfeld FOV der betreffenden Kamera vorhandenen Verdeckungsbereiche VB. Beträgt beispielsweise der Anteil der Summe der Verdeckungsbereiche VB (VB1 + VB2) in den Kamerabildern der ersten vorderen Fahrzeugkamera 2-1 nahezu 50 %, wie in dem Verkehrsszenario gemäß Figur 3 dargestellt, wird ab einem gewissen Schwellenwert soweit möglich auf Kamerabilder umgeschaltet, die von anderen Fahrzeugkameras des Fahrzeugs F geliefert werden.

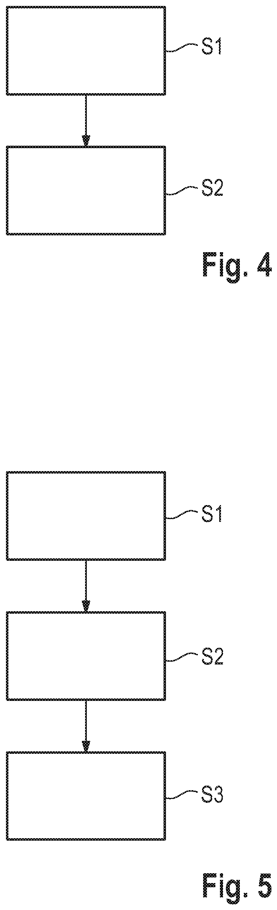

Figur 4 zeigt ein Ablaufdiagramm zur Darstellung eines Ausführungsbeispiels des erfindungsgemäßen Verfahrens zur Ermittlung von Verdeckungsbereichen VB in der Fahrzeugumgebung eines Fahrzeuges F.

In einem ersten Schritt S1 werden Sensordaten, die von Umgebungssensoren des Fahrzeuges F erzeugt werden, zur Erkennung von Hindernissen H in der Fahrzeugumgebung des Fahrzeuges F ausgewertet. Dies geschieht beispielsweise durch einen Prozessor bzw. Mikroprozessor der Datenverarbeitungseinheit 4 eines Fahrerassistenzsystems 1.

In einem zweiten Schritt S2 werden in Abhängigkeit der erkannten Hindernisse H Verdeckungsbereiche VB bzw. Verdeckungsflächen berechnet. Diese Verdeckungsbereiche VB werden durch Hindernisse H in der Fahrzeugumgebung FU hervorgerufen und schränken ein Sichtfeld FOV von optischen Umgebungssensoren des Fahrerassistenzsystems 1 ein.

Figur 5 zeigt ein weiteres Ausführungsbeispiel des erfindungsgemäßen Verfahrens. Bei einer möglichen Ausführungsform werden nach der Ermittlung der Verdeckungsbereiche VB die Bildsensordaten, die von den optischen Umgebungssensoren stammen, in denen sich die ermittelten Verdeckungsbereiche VB befinden, durch die Datenverarbeitungseinheit 4 oder eine sonstige Einheit aufbereitet. Dabei können die Bildsensordaten der betreffenden optischen Umgebungssensoren bzw. Fahrzeugkameras, in deren Sichtfeld bzw. Sichtbereich sich die Verdeckungsbereiche VB befinden, gefiltert werden. Alternativ können die ermittelten Verdeckungsbereiche innerhalb der Kamerabilder mit Texturflächen überdeckt werden.

Bei einer weiteren möglichen Ausführungsform erfolgt im Schritt S3 in Abhängigkeit von den im Schritt S2 ermittelten bzw. berechneten Verdeckungsbereichen VB eine Ansteuerung der optischen Umgebungssensoren, beispielsweise ein Umschalten zwischen verschiedenen Umgebungssensoren. Dabei kann die Größe der ermittelten Verdeckungsbereiche VB bzw. deren Anteil an dem Gesamtsichtfeld FOV der Fahrzeugkamera mitberücksichtigt werden.

Bei einer möglichen Ausführungsform wird im Schritt S2 ein durch ein erkanntes Hindernis H hervorgerufener Verdeckungsbereich VB in Abhängigkeit von dem vorkonfigurierten Sichtfeld FOV des betreffenden optischen Umgebungssensors 2-i berechnet. Im Weiteren erfolgt im Schritt S3 die Berechnung der Verdeckungsbereiche VB zusätzlich in Abhängigkeit einer Relativgeschwindigkeit zwischen dem erkannten Hindernis H und dem Fahrzeug F.

Das erfindungsgemäße Fahrerassistenzsystem 1 kann für beliebige Fahrzeuge, insbesondere Straßenfahrzeuge, eingesetzt werden.

Bei einer möglichen Ausführungsform werden die durch das erfindungsgemäße Verfahren ermittelten Verdeckungsbereiche VB für weitere Funktionen des Fahrerassistenzsystems 1 ausgewertet. Beispielsweise kann bei einer möglichen Applikation aus dem Anteil der Verdeckungsbereiche VB an den Sichtfeldern FOV der Fahrzeugkameras 2-i eine Verkehrsdichte auf einer Verkehrsstraße abgeleitet werden. Bewegt sich beispielsweise ein Fahrzeug F auf einer dreispurigen Autobahn auf der mittleren Fahrspur, werden bei einer hohen Verkehrsdichte große Anteile der Sichtfelder FOV der Fahrzeugkameras 2 durch andere Fahrzeuge, die auf der Autobahn in gleicher Richtung fahren, abgedeckt. Je höher die Verkehrsdichte auf der Straße ist, desto größer ist die Wahrscheinlichkeit der Entstehung eines Verkehrsstaus, insbesondere bei Auftreten eines Verkehrsengpasses infolge eines Fahrzeugunfalls auf der Straße. Der Anteil der Verdeckungsflächen VB innerhalb des Sichtfeldes FOV einer Kamera 2 stellt somit ein Maß für die momentane Verkehrsdichte auf der betreffenden Fahrstraße dar. Dieses Verkehrsdichtemaß kann bei einer möglichen Ausführungsform für weitere Funktionen des Fahrerassistenzsystems 1 ausgewertet werden.

## Patentansprüche

1. Fahrerassistenzsystem (1) für ein Fahrzeug (F) mit:
- Umgebungssensoren (2), die eine Fahrzeugumgebung des Fahrzeuges (F) sensorisch erfassen; und mit
- einer Datenverarbeitungseinheit (4), die Sensordaten der Umgebungssensoren (2;5) zur Erkennung von Hindernissen (H) in der Fahrzeugumgebung des Fahrzeuges (F)auswertet,
- wobei in Abhängigkeit von erkannten Hindernissen (H) Verdeckungsbereiche (VB) in der Fahrzeugumgebung des Fahrzeuges (F) ermittelt werden, die von den Hindernissen (H) verdeckt werden und einen Sichtbereich (FOV) von optischen Umgebungssensoren (2) des Fahrerassistenzsystems (1) einschränken,
- wobei die Datenverarbeitungseinheit (4) die durch die erkannten Hindernisse (H) hervorgerufenen Verdeckungsbereiche (VB) in Abhängigkeit von einer Relativgeschwindigkeit zwischen den erkannten Hindernissen (H) und dem Fahrzeug (F) berechnet,
- wobei eine Steuerschaltung (6) vorgesehen ist, die in Abhängigkeit der von den erkannten Hindernissen (H) hervorgerufenen Verdeckungsbereiche (VB) optische Umgebungssensoren (2) ansteuert und zwischen verschiedenen optischen Umgebungssensoren (2) des Fahrzeuges (F) umschaltet.

2. Fahrerassistenzsystem nach Anspruch 1,
wobei die Datenverarbeitungseinheit (4) Bildsensordaten, die von optischen Umgebungssensoren (2) stammen, in den ermittelten Verdeckungsbereichen (VB) aufbereitet, insbesondere filtert.

3. Fahrerassistenzsystem nach Anspruch 1,
wobei die Datenverarbeitungseinheit (4) die von den erkannten Hindernissen (H) hervorgerufenen Verdeckungsbereiche (VB) mit Texturflächen überdeckt.

4. Fahrerassistenzsystem nach einem der vorangehenden Ansprüche 1 bis 3,
wobei die Datenverarbeitungseinheit (4) die durch die erkannten Hindernisse (H) hervorgerufenen Verdeckungsbereiche (VB) in Abhängigkeit von einer zur Bilddarstellung verwendeten Projektionsfläche berechnet.

5. Fahrerassistenzsystem nach einem der vorangehenden Ansprüche 1 bis 4,
wobei die optischen Umgebungssensoren (2) Fahrzeugkameras, insbesondere Fischaugenkameras, aufweisen, die jeweils ein vorgegebenes Sichtfeld (FOV) besitzen.

6. Fahrerassistenzsystem nach Anspruch 5,
wobei die Datenverarbeitungseinheit (4) die durch die erkannten Hindernisse (H) hervorgerufenen Verdeckungsbereiche (VB) in Abhängigkeit von den Sichtfeldern (FOV) der betroffenen optischen Umgebungssensoren (2) berechnet.

7. Verfahren zum Ermitteln von Verdeckungsbereichen (VB) in der Fahrzeugumgebung eines Fahrzeuges (F) mit den folgenden Schritten:
(a) Auswerten (S1) von Sensordaten, die von Umgebungssensoren des Fahrzeuges (F) erzeugt werden, zur Erkennung von Hindernissen (H) in der Fahrzeugumgebung des Fahrzeuges (F);
(b) Berechnen (S2) in Abhängigkeit der erkannten Hindernisse (H) von Verdeckungsbereichen (VB), die von den erkannten Hindernissen (H) verdeckt werden und einen Sichtbereich (FOV) von optischen Umgebungssensoren des Fahrzeuges (F) einschränken, wobei die durch die erkannten Hindernisse (H) hervorgerufenen Verdeckungsbereiche (VB) in Abhängigkeit von einer Relativgeschwindigkeit zwischen den erkannten Hindernissen (H) und dem Fahrzeug (F) berechnet werden; und
(c) Ansteuern (S3) der optischen Umgebungssensoren (2) in Abhängigkeit der von den erkannten Hindernissen (H) hervorgerufenen Verdeckungsbereiche (VB), durch Umschalten zwischen verschiedenen optischen Umgebungssensoren (2) des Fahrzeuges (F).

8. Verfahren nach Anspruch 7,
wobei Sensordaten, die von optischen Umgebungssensoren (2) des Fahrzeuges (F) stammen, in den berechneten Verdeckungsbereichen (VB) aufbereitet, insbesondere gefiltert, werden.

9. Verfahren nach Anspruch 7,
wobei die von den erkannten Hindernissen (H) hervorgerufenen Verdeckungsbereiche (VB) mit Texturflächen überdeckt werden.

10. Verfahren nach einem der vorangehenden Ansprüche 7 bis 9, wobei die durch die erkannten Hindernisse (H) hervorgerufenen Verdeckungsbereiche (VB) in Abhängigkeit von einer zur Bilddarstellung verwendeten Projektionsfläche berechnet werden.

11. Verfahren nach einem der vorangehenden Ansprüche 7 bis 10, wobei die durch die erkannten Hindernisse (H) hervorgerufenen Verdeckungsbereiche (VB) in Abhängigkeit von vorgegebenen Sichtfeldern (FOV) der betroffenen optischen Umgebungssensoren (2) berechnet werden.

## Claims

1. Driver assistance system (1) for a vehicle (F), comprising:
- environment sensors (2), which sense a vehicle environment of the vehicle (F), and comprising
- a data processing unit (4), which evaluates sensor data of the environment sensors (2; 5) in order to detect obstacles (H) in the vehicle environment of the vehicle (F),
- wherein, dependent on obstacles (H) detected, concealed regions (VB) in the vehicle environment of the vehicle (F) that are concealed by the obstacles (H) and restrict a field of view (FOV) of optical environment sensors (2) of the driver assistance system (1) are determined,
- wherein the data processing unit (4) calculates the concealed regions (VB) caused by the detected obstacles (H) dependent on a relative speed between the detected obstacles (H) and the vehicle (F),
- wherein a control circuit (6), which, dependent on the concealed regions (VB) caused by the detected obstacles (H), actuates optical environment sensors (2) and switches between different optical environment sensors (2) of the vehicle (F), is provided.

2. Driver assistance system according to Claim 1,
wherein the data processing unit (4) processes, in particular filters, image sensor data that originate from optical environment sensors (2) in the determined concealed regions (VB).

3. Driver assistance system according to Claim 1,
wherein the data processing unit (4) covers the concealed regions (VB) caused by the detected obstacles (H) with textured areas.

4. Driver assistance system according to one of the preceding Claims 1 to 3,
wherein the data processing unit (4) calculates the concealed regions (VB) caused by the detected obstacles (H) dependent on a projection surface used for displaying images.

5. Driver assistance system according to one of the preceding Claims 1 to 4, wherein the optical environment sensors (2) have vehicle cameras, in particular fisheye cameras, which each have a predefined field of view (FOV).

6. Driver assistance system according to Claim 5,
wherein the data processing unit (4) calculates the concealed regions (VB) caused by the detected obstacles (H) dependent on the fields of view (FOV) of the relevant optical environment sensors (2).

7. Method of determining concealed regions (VB) in the vehicle environment of a vehicle (F), comprising the following steps:
(a) evaluating (S1) sensor data that are generated by environment sensors of the vehicle (F) in order to detect obstacles (H) in the vehicle environment of the vehicle (F);
(b) calculating (S2), dependent on the detected obstacles (H), concealed regions (VB) that are concealed by the detected obstacles (H) and restrict a field of view (FOV) of optical environment sensors of the vehicle (F), wherein the concealed regions (VB) caused by the detected obstacles (H) are calculated dependent on a relative speed between the detected obstacles (H) and the vehicle (F); and
(c) actuating (S3) the optical environment sensors (2) dependent on the concealed regions (VB) caused by the detected obstacles (H), by switching between different optical environment sensors (2) of the vehicle (F).

8. Method according to Claim 7,
wherein sensor data that originate from optical environment sensors (2) of the vehicle (F) are processed, in particular filtered, in the calculated concealed regions (VB).

9. Method according to Claim 7,
wherein the concealed regions (VB) caused by the detected obstacles (H) are covered with textured areas.

10. Method according to one of the preceding Claims 7 to 9, wherein the concealed regions (VB) caused by the detected obstacles (H) are calculated dependent on a projection surface used for displaying images.

11. Method according to one of the preceding Claims 7 to 10, wherein the concealed regions (VB) caused by the detected obstacles (H) are calculated dependent on predefined fields of view (FOV) of the relevant optical environment sensors (2).

## Revendications

1. Système d'assistance à la conduite (1) pour un véhicule (F) comprenant :
- des capteurs d'environnement (2) qui détectent de manière sensorielle un environnement de véhicule du véhicule (F) ; et comprenant
- une unité de traitement de données (4), qui évalue les données des capteurs d'environnement (2 ; 5) afin de reconnaître des obstacles (H) dans l'environnement de véhicule du véhicule (F),
- des zones d'occultation (VB) étant déterminées dans l'environnement de véhicule du véhicule (F) en fonction des obstacles (H) reconnus, lesquelles sont occultées par les obstacles (H) et limitent un champ de vision (FOV) de capteurs d'environnement (2) optiques du système d'assistance à la conduite (1),
- l'unité de traitement des données (4) calculant les zones d'occultation(VB) provoquées par les obstacles (H) reconnus en fonction d'une vitesse relative entre les obstacles (H) reconnus et le véhicule (F),
- un circuit de commande (6) étant prévu, qui commande des capteurs d'environnement (2) optiques en fonction des zones d'occultation (VB) provoquées par les obstacles (H) reconnus et commute entre différents capteurs d'environnement (2) optiques du véhicule (F).

2. Système d'assistance à la conduite selon la revendication 1,
l'unité de traitement des données (4) traitant, notamment filtrant, les données du capteur d'images qui proviennent des capteurs d'environnement (2) optiques dans les zones d'occultation (VB) déterminées.

3. Système d'assistance à la conduite selon la revendication 1,
l'unité de traitement des données (4) recouvrant avec des surfaces texturées les zones d'occultation (VB) provoquées par les obstacles (H) reconnus.

4. Système d'assistance à la conduite selon l'une des revendications 1 à 3 précédentes,
l'unité de traitement des données (4) calculant les zones d'occultation (VB) provoquées par les obstacles (H) reconnus en fonction d'une surface de projection utilisée pour la représentation d'images.

5. Système d'assistance à la conduite selon l'une des revendications 1 à 4 précédentes,
les capteurs d'environnement (2) optiques comportant des caméras embarquées, en particulier des caméras fisheye, qui possèdent chacune un champ de vision (FOV) prédéfini.

6. Système d'assistance à la conduite selon la revendication 5,
l'unité de traitement de données (4) calculant les zones d'occultation (VB) provoquées par les obstacles (H) reconnus en fonction des champs de vision (FOV) des capteurs d'environnement (2) optiques concernés.

7. Procédé de détermination de zones d'occultation (VB) dans l'environnement de véhicule d'un véhicule (F), comprenant les étapes suivantes :
(a) évaluation (S1) de données de capteur, qui sont générées par des capteurs d'environnement du véhicule (F), afin de reconnaître des obstacles (H) dans l'environnement de véhicule du véhicule (F) ;
(b) calcul (S2), en fonction des obstacles (H) reconnus, de zones d'occultation (VB) qui sont occultées par les obstacles (H) reconnus et qui limitent un champ de vision (FOV) de capteurs d'environnement optiques du véhicule (F), les zones d'occultation (VB) provoquées par les obstacles (H) reconnus étant calculées en fonction d'une vitesse relative entre les obstacles (H) reconnus et le véhicule (F) ; et
(c) commande (S3) des capteurs d'environnement (2) optiques en fonction des zones d'occultation (VB) provoquées par les obstacles (H) reconnus, par commutation entre différents capteurs d'environnement (2) optiques du véhicule (F).

8. Procédé selon la revendication 7,
les données des capteurs qui proviennent des capteurs environnementaux (2) optiques du véhicule (F) étant traitées, notamment filtrées, dans les zones d'occultation (VB) calculées.

9. Procédé selon la revendication 7,
les zones d'occultation (VB) provoquées par les obstacles (H) reconnus étant recouvertes par des surfaces texturées.

10. Procédé selon l'une des revendications 7 à 9 précédentes, les zones d'occultation (VB) provoquées par les obstacles (H) reconnus étant calculées en fonction d'une surface de projection utilisée pour la représentation d'images.

11. Procédé selon l'une des revendications 7 à 10 précédentes, les zones d'occultation (VB) provoquées par les obstacles (H) reconnus étant calculées en fonction de champs de vision (FOV) prédéfinis des capteurs d'environnement (2) optiques concernés.
